# EUROPEAN PATENT APPLICATION

(11) **EP 2 857 376 A1**
(43) Date of publication of application: **08.04.2015**
(21) Application number: 12877161.5
(22) Date of filing: 25.05.2012
(51) Int. Cl.: C05F 7/00, C02F 1/28, C02F 1/58, C05B 3/00, C05B 13/06

(54) **METHOD FOR PRODUCING PHOSPHOROUS FERTILIZER**

(71) Applicant: Taiheiyo Cement Corporation, Tokyo 135-8578 (JP)
(72) Inventor: IMAI, Toshio, Sakura-shi Chiba 285-8655 (JP); AKETO, Tsuyoshi, Sakura-shi Chiba 285-8655 (JP); MIURA, Keiichi, Sakura-shi Chiba 285-8655 (JP); IWAKAWA, Hiroaki, Tokyo 135-8587 (JP); IWATA, Takashi, Tokyo 100-0004 (JP); TODA, Masaya, Tokyo 174-0054 (JP); MINOWA, Nobutaka, Tokyo 100-0004 (JP)
(74) Representative: Isarpatent
(86) International application number: PCT/JP2012/063528
(87) International publication number: WO 2013/175632

(57) **Abstract**

[PROBLEM] To recover phosphorous from sewage water at low cost and obtain a high-quality phosphate fertilizer.

[SOLUTION] A method for producing a phosphate fertilizer, which comprises bringing phosphorous in a sewage S1 in a sewage-treatment plant into contact with a calcium-containing recovery material A1 to recover the phosphorous and burning the phosphorus recovered material AP, a sludge S9 generated in the sewage-treatment plant and a calcium source that serves as composition-adjusting agent A2. The burning of the phosphorus recovered material AP and others may be carried out at a burning temperature of 1150 to 1350°C inclusive. The calcium oxide content in the phosphate fertilizer may be 30 to 55 mass% inclusive. It becomes possible to produce a high-quality phosphate fertilizer having a ratio of citric acid-soluble phosphate of 60% or more and/or a ratio of hydrochloric acid-soluble silicate of 40% or more. Besides the calcium source, a magnesium source and/or a silica source may be added as the composition-adjusting agent. The resultant burnt product B1 may be pulverized and then granulated together with a granulation aid A3 using a granulating/molding machine 17.

## Description

### TECHNICAL FIELD

The present invention relates to a method for producing phosphate fertilizer, and more particularly to a method for producing phosphate fertilizer after recovering phosphorous contained in sewage in sewage-treatment plants.

### BACKGROUND ART

Although phosphorus is one of the three elements of fertilizers, it depends on natural phosphate rock. Phosphate rock has been imported the whole quantity from overseas since our country has few phosphate rock mine. There is a possibility that acquisition of the phosphate rock may become very difficult from now on since it is worried about that the phosphate rock will be drained in the near future and so on, therefore, how to efficiently recover phosphorous from sewage containing much phosphorous and so on is a serious issue in current technological development in our country.

In this connection, for instance, in Patent Document 1 is described a method for producing a fertilizer that is higher content of phosphorus and is safe. In this method, a sludge incineration ash having higher content of phosphorus is obtained by adding an iron flocculant agent to a sewage to settle the phosphorus component included in the sewage and a precipitate together with a sludge is collected, and then dewatering and incinerating the same; a coke and magnesium oxide are added to the sludge incineration ash; and the mixture is heated in a fusion furnace; a molten slag is selectively discharged to a water vessel where the slag is rapidly cooled and is made into granular form.

### PRIOR ART DOCUMENTS

### PATENT DOCUMENTS

Patent Document 1: Japanese Patent Publication No. 2003-112988 gazette

### SUMMARY OF THE INVENTION

### PROBLEM TO BE SOLVED BY THE INVENTION

However, in the method for producing phosphate fertilizer described in the above patent document, heat energy is used to obtain the sludge incineration ash, and a larger amount of heat energy is further required in a hot melting process, so that a great amount of energy is consumed and continuous production cannot be carried out, which causes a problem of skyrocketed production cost.

Then, the present invention has been made in consideration of the above problems to be solved, and the object thereof is to recover phosphorus from sewage at low cost and obtain high quality phosphate fertilizer.

### MEANS OF SOLVING THE PROBLEMS

To achieve the object, the present invention relates to a method for producing phosphate fertilizer, and the method is characterized by comprising the steps of: bringing phosphorous in a sewage in a sewage-treatment plant into contact with a calcium-containing recovery material to recover the phosphorous through adsorption (reaction) and burning the phosphorus recovered material, a dehydrated sludge generated in the sewage-treatment plant and a calcium source together.

With the present invention, phosphorus in a sewage in a sewage-treatment plant is recovered, and the phosphorus recovered material is treated together with a sludge generated in the sewage-treatment plant, so that most of the phosphorous accumulated in the sewage-treatment plant can thoroughly be recovered and reused as a phosphate fertilizer with high phosphorous concentration.

In addition, the phosphorus recovered material and the dehydrated sludge were melted in the final process to fertilize them in the past, but this invention adopts burning process whose processing temperature is lower than that of melting process, which causes consumed energy to be reduced, resulting in reduced production cost. Further, continuously operating an incineration process as a pretreatment before burning process, and the burning process allows energy efficiency and production efficiency to be improved further.

Besides, in the present invention, using a calcium-containing recovery material enables reduced volume of a precipitating recovered material in comparison to the cases where recovery materials containing iron flocculant or aluminum flocculant are used, so that it becomes possible to reduce processed volume in downstream processes, resulting in lower production cost. In addition, iron and aluminum in the recovery materials containing iron flocculant or aluminum flocculant do not affect any quality change of the phosphate fertilizer, but when the calcium-containing recovery material is used, calcium contained in the recovery material improves quality of the phosphate fertilizer. While processes for treating ammonia and so on are needed in so-called MAP method, the calcium-containing recovery material can simplify production processes.

In the method for producing phosphate fertilizer, it is possible to apply the following steps: the sewage in the sewage-treatment plant is concentrated; to the concentrated sewage is added the recovery material to bring phosphorous in the sewage into contact with the recovery material and then the sewage is dehydrated to obtain the phosphorus recovered material and a dehydrated sludge together; and to the phosphorus recovered material and the dehydrated sewage, which are obtained by the dehydration, is mixed the calcium source and the mixture is burnt.

In addition, in the method for producing phosphate fertilizer, it is possible to apply the following steps: the sewage in the sewage-treatment plant is concentrated and dehydrated to divide it into a dehydration filtrate and a dehydrated sludge; to the obtained dehydration filtrate is added the recovery material to bring phosphorous in the dehydration filtrate into contact with the recovery material and then the dehydration filtrate is solid-liquid separated to obtain the phosphorus recovered material; and the phosphorus recovered material, the dehydrated sludge and the calcium source are mixed together and burnt.

In the method for producing phosphate fertilizer, the burning of the phosphorus recovered material, the dehydrated sludge and the calcium source can be carried out at a burning temperature of 1150 °C or higher and 1350°C or lower. With this, a phosphate fertilizer with excellent quality can be obtained.

In the method for producing phosphate fertilizer, the calcium oxide content in the phosphate fertilizer can be 30 mass percent or higher and 55 mass percent or lower, preferably 38 mass percent or higher and 52 mass percent or lower, further preferably 40 mass percent or higher and 50 mass percent or lower. In addition, a ratio of citric acid-soluble phosphate of the phosphate fertilizer can be 60 percent or higher, and a ratio of hydrochloric acid-soluble silicate of the phosphate fertilizer can be 40 percent or higher. With this, the ratio of citric acid-soluble phosphate and the ratio of hydrochloric acid-soluble silicate of the phosphate fertilizer are further improved, which enables production of high quality fertilizer with high nutrition ratio of phosphate and silicate for crops.

Here, the ratio of citric acid-soluble phosphate is defined as mass ratio of soluble phosphate in citric acid to phosphate in a phosphate fertilizer, and the ratio of hydrochloric acid-soluble silicate is defined as mass ratio of soluble silicate to silicate in a phosphate fertilizer. The higher the ratio of citric acid-soluble phosphate and the ratio of hydrochloric acid-soluble silicate are, the more easily the phosphate and the silicate are taken by crops, so that higher ratios mean more excellent fertilizers in general.

In the method for producing phosphate fertilizer, the calcium-containing recovery material may be an amorphous calcium silicate hydrate alone or an aggregate of the amorphous calcium silicate hydrate and calcium hydroxide. These materials become calcium sources also, which are added in a downstream process, and are high in settleability, so that adding these materials allows solid-liquid separation to be carried out with ease.

In the method for producing phosphate fertilizer, in addition to the calcium source, a magnesium source or/and a siliceous source can be mixed and burnt. With this, flexibility in component adjustment is promoted, which enables production of variety of fertilizers in accordance with usage.

### EFFECTS OF THE INVENTION

As described above, with the present invention, it becomes possible to recover phosphorus from sewage at low cost and produce a high-quality phosphate fertilizer, and so on. As a result, wastes can be effectively utilized as phosphorus source, and saving natural resource and environment protection can be promoted also.

### BRIEF DESCRIPTION OF THE DRAWINGS

[FIG. 1] A configuration diagram showing an example of a system for carrying out a method for producing phosphate fertilizer according to the present invention.
[FIG. 2] A configuration diagram showing another example of a system for carrying out a method for producing phosphate fertilizer according to the present invention.
[FIG. 3] An XRD chart of a powder obtained by drying an aggregate of an amorphous calcium silicate hydrate and calcium hydroxide.

### MODE FOR CARRYING OUT THE INVENTION

Next, embodiments of the present invention will be explained with reference to drawings in detail.

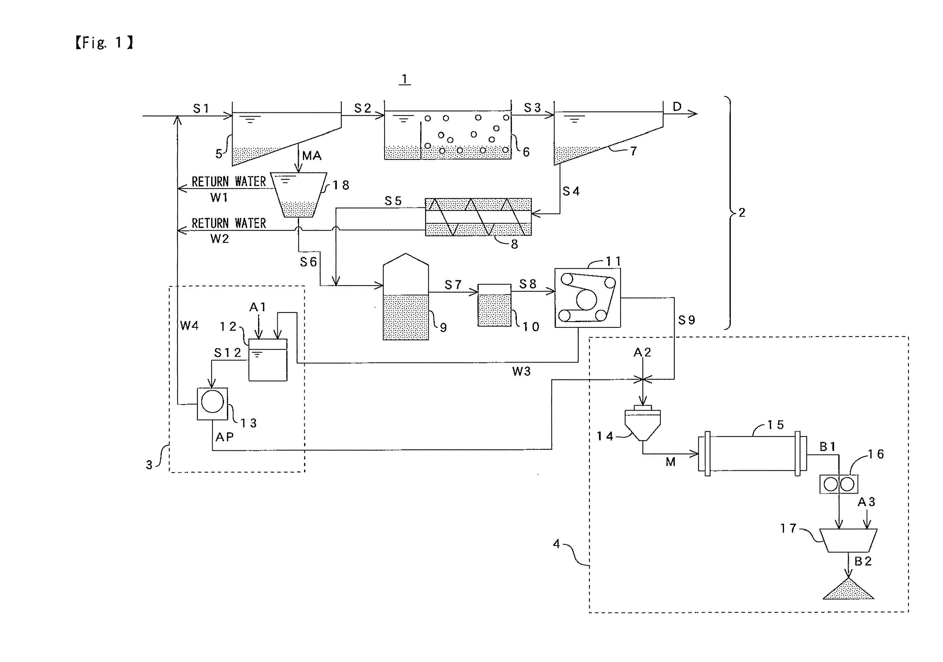

FIG. 1 shows an example of a system for carrying out a method for producing phosphate fertilizer according to the present invention, and this phosphate fertilizer producing system 1 is roughly composed of: a water treatment equipment 2 for condensing a sewage S1 brought to a sewage-treatment plant and dividing it into a dehydrated sludge S9 and a dehydration filtrate W3; a phosphorus recovery equipment 3 for adding a calcium-containing recovery material A1 to the dehydration filtrate W3 divided in the water treatment equipment 2 to settle them as a phosphorus recovered material AP; and a mixing and burning equipment 4 for mixing the dehydrated sludge S9 divided in the water treatment equipment 2, the phosphorus recovered material AP obtained in the phosphorus recovery equipment 3 and a composition-adjusting agent A2, and for burning the mixture.

The water treatment equipment 2 is composed of: a primary sedimentation tank 5 for condensing a suspended matter and a mud MA in the sewage S1, which precipitate easily, and for sending them to a gravitational sedimentation tank 18; a biological treatment tank 6 for treating with a microbe etc. a sewage S2 after the first sedimentation, including organic substances, nitrogen, phosphorus and so on, from the primary sedimentation tank 5; a final sedimentation tank 7 for settling an activated sludge S3 treated in the biological treatment tank 6 over long period of time and discharging a purified liquid D; a centrifugal concentrator 8 for further condensing, by centrifugal force, an excess sludge S4 from the final sedimentation tank 7; a methane fermentation tank 9 for decomposing a thickened sludge S5 from the centrifugal concentrator 8 and a thickened sludge S6 from the gravitational sedimentation tank 18; a storage tank 10 for storing a sludge S7 discharged from the methane fermentation tank 9; and a dehydrator 11 for solid/liquid separating a sludge S8 discharged from the storage tank 10 into the dehydrated sludge S9 and the dehydration filtrate W3.

The phosphorus recovery equipment 3 is composed of: a phosphorus recovery process 12 for adding the calcium-containing recovery material A1 to the dehydration filtrate W3 to bring phosphorous in the filtrate W3 into contact with the recovery material A1, and for recovering phosphorous-containing sediment through adsorption (reaction); and a recovered material separation process 13 for obtaining the phosphorus recovered material AP from a phosphorous-containing slurry S12 including the recovery material A1 and so on.

For the recovery material A1 is preferably used a calcium-containing recovery material such as an amorphous calcium silicate alone (hereinafter referred to as "CSH") or an aggregate of the CSH and calcium hydroxide (hereinafter referred to as "CSH aggregate"). Further, the CSH or the CSH aggregate having a Ca/Si molar ration of 0.8 to 20 are preferably used. The CSH or the CSH aggregate has high affinity with phosphorous, and is porous with a large specific surface area, so that it has high phosphorus adsorption capability, which can selectively recover phosphorus. In addition, the CSH or the CSH aggregate is excellent in settleability and is easily solid/liquid separated. Besides the materials, calcium hydroxide, calcium chloride, baked dolomite, slaked dolomite and others can be used.

The mixing and burning equipment 4 is composed of: a mixer 14 for adding the composition-adjusting agent A2 as a calcium source to the dehydrated sludge S9 divided in the water treatment equipment 2 and the phosphorus recovered material AP recovered in the phosphorus recovery equipment 3 and for mixing them; a rotary kiln 15 for burning a mixture M fed from the mixer 14; a pulverizer 16 for pulverizing a burnt material B1 to desired sizes; and a pan pelletizer 17 for adding a pelletization aid A3 to a pulverized burnt material B2 and for pelletizing them.

The composition-adjusting agent A2 is used for adjusting calcium oxide content of the phosphate fertilizer in the predetermined range, as a calcium source can be used calcium carbonate, calcium oxide, calcium hydroxide, calcium phosphate, calcium chloride, calcium sulfate, limestone, livestock dung such as chicken droppings, and so on. Calcium oxide content of the phosphate fertilizer may be 30 mass percent or more and 55 mass percent or less, preferably 38 mass percent or more and 52 mass percent or less, more preferably 40 mass percent or more and 50 mass percent or less. When the content is between 30 percent and 55 percent, the ratio of citric acid-soluble phosphate and the ratio of hydrochloric acid-soluble silicate of the fertilizer become high.

In addition, as a magnesium source can be used a limestone of high magnesium content, which is unfavorable for a raw material for cement production due to high magnesium content, dolomite, magnesium ammonium phosphate, magnesium oxide, magnesium hydroxide, serpentinite, olivine, ferronickel slag, and so on. Meanwhile, since sewage contains much silicate in general, usually it is unnecessary to add silica source. But, when silicon dioxide content is low, it is possible to appropriately add, in accordance with usage, silica source such as silica stone, silica sand, casting sand, acid volcanic rock, calcium silicate, ready-mixed concrete sludge, concrete waste, and so on.

The rotary kiln 15 is able to operate continuously, as a burning furnace, the phosphorus recovered material AP and others at 1150 °C or higher and 1350 °C or lower, preferably1200°C or higher and 1300°C or lower, and is preferably able to work as incineration of the dehydrated sludge S9 prior to burning with one device. But, it is possible to separately install an incinerator. As a burning furnace is used a fluidized bed furnace, a stoker furnace, a carbonization gasification furnace, and so on.

Phosphate fertilizer at a temperature between 1150 °C and 1350 °C is high in ratio of citric acid-soluble phosphate and ratio of hydrochloric acid-soluble silicate. The burning time is preferably 10 minutes to 90 minutes, and more preferably 20 minutes to 75 minutes. When the time is less than 10 minutes burning is insufficient, and when the time exceeds 90 minutes production efficiency decreases.

Further, in place of the pan pelletizer 17, devices capable of expecting the same granulation effect as the pan pelletizer 17 can be used, such as pan type mixers, agitating granulators, briquetting machines, roll press devices and extruder.

As the pelletization aid A3 can be used a waste molasses after alcohol distillation, a waste pulp slurry, polyvinyl alcohol, carboxymethyl cellulose, and so on.

Next, the function of the phosphate fertilizer producing system 1 with the above component will be explained with reference to FIG. 1.

The sewage S1 flowing into the phosphate fertilizer producing system 1 is lead to the primary sedimentation tank 5, the suspending matter and the mud MA, which precipitate easily, are concentrated in the primary sedimentation tank 5, and are transported to the gravitational sedimentation tank 18, and the sewage S2 containing organic substances etc. is supplied to the biological treatment tank 6 to be treated by the microbe etc.

The activated sludge S3 generated in the biological treatment tank 6 is settled over long period of time in the final sedimentation tank 7, and the settled sludge is supplied to the centrifugal concentrator 8 as an excess sludge S4, and the purified water D from the final sedimentation tank 7 is discharged.

The excess sludge S4 from the final sedimentation tank 7 is concentrated with the centrifugal concentrator 8, and is supplied to the methane fermentation tank 9 together with the thickened sludge S6 stored in the gravitational sedimentation tank 18. In the methane fermentation tank 9 is decomposed the thickened sludges S5, S6 by the microbe, and after the generated sludge S7 is once stored in the storage tank 10, the sludge S8 is supplied to the dehydrator 11 to obtain the dehydrated sludge S9 through solid/liquid separation, and the obtained dehydration filtrate W3 is supplied to the phosphorus recovery process12 of the phosphorus recovery equipment 3.

The dehydration filtrate W3 has higher phosphorous content, and when it is returned as a return water without any treatments, sewage treatment load is increased in the original process, so that the recovery material A1 is added in the phosphorus recovery process12 to adsorb phosphorous contained in the dehydration filtrate W3 by the recovery material A1. From the slurry, which is the mixture of the recovery material A1 and the dehydration filtrate W3, the phosphorus recovered material AP can be obtained through solid/liquid separation in the recovered material separation process 13 or the like. A return water W4 generated by the solid/liquid separation is returned to the primary sedimentation tank 5 together with a return water W1 from the gravitational sedimentation tank 18 and a return water W2 from the centrifugal concentrator 8.

Mixing and agitating time (residence time) in the phosphorus recovery procedure is preferably 5 minutes or more and 120 minutes or less, more preferably 15 minutes or more and 60 minutes or less. When the time is less than 5 minutes, the phosphorus recovery efficiency decreases, and exceeding 120 minutes causes economical disadvantage.

In addition, when carbonic acid generates in the methane fermentation tank 9, phosphorus recovery performance of the recovery material A1 is decreased. But, increasing the amount of the recovery material A1 can deal with the problem. The recovery material A1 includes calcium, and the phosphorus concentration of the phosphorus recovered material AP decreases by adding a large amount of the recovery material, however, which merely causes the amount of the calcium source being added in downstream to be decreased, and which mostly does not affect citric acid-soluble phosphate, hydrochloric acid-soluble silicate, ratio of citric acid-soluble phosphate and ratio of hydrochloric acid-soluble silicate of obtained fertilizers.

Or, the pH adjustment prevents the calcium phosphates in the phosphorus recovered material AP from dissolving on liquid side, and prevents the recovery material A1 from carbonation, which causes the calcium phosphate to hardly be generated, and so on, and phosphorus can efficiently be recovered. In this case, acid such as hydrochloric acid can be added to adjust pH of the dehydration filtrate W3 to 6.0 or less, preferably 5.3 or less, which causes carbonate ion in the dehydration filtrate W3 to change into carbon dioxide, and the dehydration filtrate W3 can be agitated while aerating it by the aeration device. With this pH control, concentration of all the carbonic acid [carbonic acid (H₂CO₃), bicarbonate (HCO³⁻), and carbonate (CO₃²⁻)] in the dehydration filtrate W3 is preferably adjusted to be 150 mg/L or less (in CO₂ equivalent) more preferably 100 mg/L or less. When the concentration of all the carbonic acid is 150 mg/L or less, the phosphorus recovery performance of the recovery material A1 will become high.

Next, the phosphorus recovered material AP and the dehydrated sludge S9 are supplied to the mixer 14 together with the composition-adjusting agent A2 as calcium source etc. to mix them. The homogenized mixture M is supplied to the rotary kiln 15, and is burnt in a temperature range between 1150 °C or more and 1350 °C or less, preferably 1200 °C or more and 1300 °C or less. Burning in these temperature ranges allows a good-quality phosphate fertilizer, whose ratio of citric acid-soluble phosphate and ratio of hydrochloric acid-soluble silicate are improved, to be obtained. Then, the burnt material is pulverized in the pulverizer 16, and is pelletized together with the pelletization aid A3 to become desired size in the pan pelletizer 17 in downstream.

The pulverization and pelletization of the burnt material are adopted in order to facilitate storage, improve handling ability, prevent raising dust, mix with fertilizer including other components or the like. Effect as fertilizer is not change by the treatment, so that it may be adopted ifnecessary.

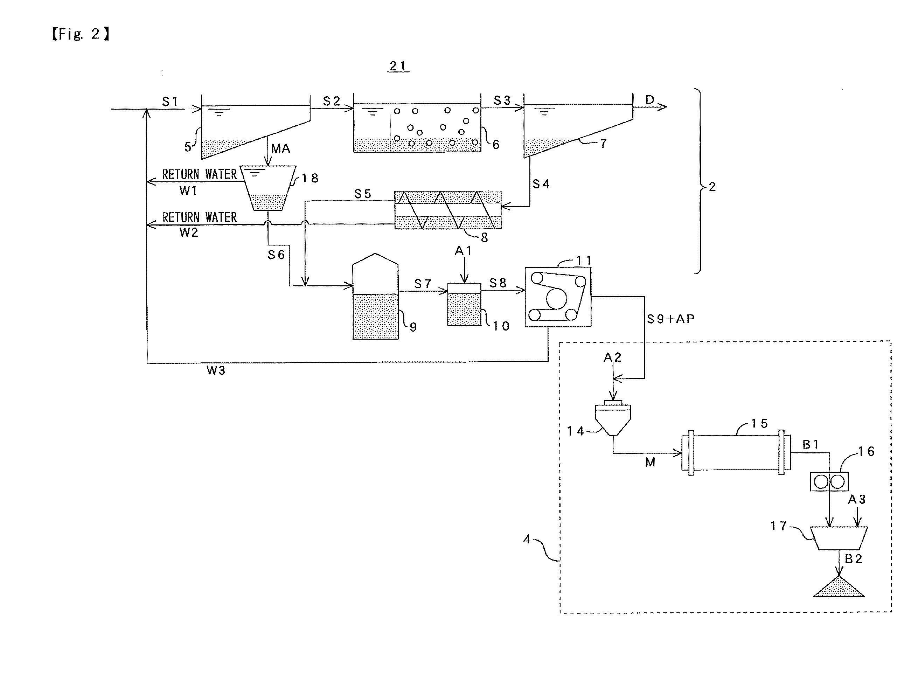

Next, another example of a system for carrying out a method for producing phosphate fertilizer according to the present invention will be explained with reference to FIG.2. In this system 21, the position where the recovery material A1 is added is different from that of the system 1 described in FIG.1, and the phosphorus recovery process 12 and recovered material separation process 13 in FIG.1 do not exist, and other devices of the system 21 are the same as those of the system 1. Then, in the system 21, to the same components as the system 1 are attached the same symbols, and explanations thereof will be omitted.

Particularly, in the system 1 described in FIG.1 is added the recovery material A1 in the phosphorus recovery process 12, but in the system 21 described in FIG.2 is added the recovery material A1 to the storage tank 10. A special flocculation tank for adding a flocculation agent can be installed downstream of the storage tank 10, and to the flocculation tank can be added the recovery material A1 singly or together with the flocculation agent. Liquid accompanying the sludge S7 that is stored in the storage tank 10 has higher content of the phosphorus than those in other areas in the system 21, and both of the phosphorus included in this liquid and the sludge can effectively be recovered by adding the recovery material A1. The recovery material A1 is a calcium-based material, and has high-flocculating effect on the sludge, so that adding the recovery material A1 to the sludge S7 before dehydration allows adding amount of polymer flocculant and inorganic flocculant such as PAC, which are normally added before dehydrating of the sludge, to be decreased. In addition, in this system 21, the phosphorus recovery process 12 and the recovered material separation process 13 become unnecessary, so that facility cost and operating cost can be decreased further.

Mixing and agitating time (residence time) in the phosphorus recovery is preferably 5 minutes or more and 120 minutes or less, more preferably 15 minutes or more and 60 minutes or less. When the time is less than 5 minutes, the phosphorus recovery efficiency falls, and exceeding 120 minutes causes economical disadvantage.

In addition, when carbonic acid generates in the methane fermentation tank 9, phosphorus recovery performance of the recovery material A1 is decreased. But, increasing amount of the recovery material A1 can deal with the problem. The recovery material A1 includes calcium, and the phosphorus concentration of the phosphorus recovered material AP decreases by adding large amount of the recovery material, however, which merely causes the amount of the calcium source being added in downstream to be decreased, and which mostly does not affect citric acid-soluble phosphate, hydrochloric acid-soluble silicate, ratio of citric acid-soluble phosphate and ratio of hydrochloric acid-soluble silicate of obtained fertilizers.

Next, the function of the phosphate fertilizer producing system 21 with the above component will be explained with reference to FIG. 2. Here, the function to the methane fermentation tank 9 is the same as that of the phosphate fertilizer producing system 1 described in FIG.1, so that the explanation thereof will be omitted.

The sludge S7 generated in the methane fermentation tank 9 is supplied to the storage tank 10; the recovery material A1 is added to the storage tank 10; and phosphorus included in the sludge S7 is adsorbed to the recovery material A1 to be settled. Next, the sludge S8 from the storage tank 10 is supplied to the dehydrator 11, and is solid/liquid separated to obtain the dehydrated sludge S9 and the recovery material A1 containing phosphorous together, and the obtained dehydration filtrate W3 is returned together with the return water W1 etc. that is discharged from the gravitational sedimentation tank 18 to the primary sedimentation tank 5.

The dehydrated sludge S8 and the recovery material A1 that are obtained by the solid/liquid separation are mixed together with the composition-adjusting agent A2 in the mixer 14, and the mixture is fed into the rotary kiln 15. A burnt material B1 burnt in the rotary kiln 15 is pulverized by the pulverizer 16 in a next stage, and to the burnt material B1 is added the pelletization aid A3 to be pelletized in the pan pelletizer 17 in a desired size.

In the two examples described above was explained the case that the recovery material A1 is added to the phosphorus recovery process 12 or the storage tank 10 where phosphorus can efficiently be recovered. But, the present invention is not limited to these adding positions. Other than the two positions described above, the adding position can be selected in more upstream process in the sewage-treatment plant. For example, the recovery material A1 can be added in the methane fermentation tank 9; to the excess sludge S4 transported from the final sedimentation tank 7 to the centrifugal concentrator 8; to the activated sludge S3 transported from the biological treatment tank 6 to the final sedimentation tank 7; or a material with which the return water W2 discharged from the gravitational sedimentation tank 18 joins.

In addition, in the above embodiment, the sewage-treatment plant having the methane fermentation tank 9 is exemplified, and phosphorus is recovered on the downstream side of the methane fermentation tank 9, but phosphorus can be recovered in the same manner by using the recovery material from sewage-treatment plants without the methane fermentation tank 9 also. Further, other than the sewage-treatment plants, the present invention can be applied to waste water containing phosphorus such as human waste treatment plants and waste water discharged from industrial plants using phosphorus chemicals.

In addition, the position where the composition-adjusting agent A2 is added is not limited to the mixer 14, but the agent may be added to the sludge S8 between the storage tank 10 and the dehydrator 11. In this case, the composition-adjusting agent A2 also becomes an object of the solid/liquid separation in the dehydrator 11. However, as the amount of the composition-adjusting agent A2 added is far less than water content of the sludge S8, the load of the dehydrator 11 does not increase.

The mixing of the phosphorus recovered material AP with the dehydrated sludge S9 or with the composition-adjusting agent A2 may be performed while maintaining water in the slurry or the cake as they are, or after each or all of them may be dried or pulverized, and pulverization may be performed for mixing the materials also.

It is not limited to the dehydrated sludge S9, but can be used a dried sludge, a carbonized sludge, a sewage sludge incinerated ash and a sewage sludge molten slag that are materials derived from sewage sludge. The dried sludge can be obtained by drying the sewage sludge or the dehydrated sludge in the sun or by driers, and its water content is approximately 50 mass percent or less. The carbonized sludge is obtained by heating the sewage sludge, the dehydrated sludge or dried sludge and carbonizing a part or all of organic matter contained in the sludges. The heating temperature is generally between 200°C and 800°C in hypoxic condition. The sewage sludge incinerated ash is a residue obtained by incinerating the dehydrated sludge and the like. In addition, the sewage sludge molten slag is a residue obtained by melting the sewage sludge incinerated ash at 1350 °C or more.

Pelletization and sieving before burning can allow the process that the burnt material is pulverized in the pulverizer 16 and pelletizing in the pan pelletizer 17 in a rear stage to be omitted, or can reduce the operation load of these devices.

In case that the pelletization is performed before burning and the mixture of the phosphorus recovered material AP, the dehydrated sludge S9 and the composition-adjusting agent A2 is in a wet condition, the mixture can be pelletized to be granular shape by an extruder, or a platy shape of the mixture obtained by a roll press device or the like can be cut into small fragment. In addition, the mixture of the phosphorus recovered material AP, the dehydrated sludge S9 and the composition-adjusting agent A2 may be in a dry condition. Water content at the pelletization can be properly adjusted to obtain enough plasticity for the pelletization and control adhering to devices or generation of big agglomerate due to flocculation. The water content may be adjusted by adding water by spraying or the like when water is insufficient, or by drying when water is too much. Pelletization before burning improves the crystallization during burning, so that a phosphate fertilizer having excellent ratio of citric acid-soluble phosphate and ratio of hydrochloric acid-soluble silicate can be obtained. In addition, a mixture scattering as dusts during burning decreases, so that production efficiency of the phosphate fertilizer is improved.

Meanwhile, in the present invention, a phosphate fertilizer is produced by burning the phosphorus recovered material and the like, which enable the phosphate fertilizer to be produced under lower temperature than melting methods, resulting in decreased energy consumption. In addition, the recovery material including iron flocculant or aluminum flocculant contains chlorine in most cases, but in the present invention, a calcium-based recovery material without chlorine etc. is used, so that the corrosion of burning furnace by chlorine attack does not occur.

Hereinafter, a test example of the phosphorus recovery material used for the present invention will be explained with reference to Table 1.

**[Table 1]**

| | PRACTICAL EXAMPLE 1 | PRACTICAL EXAMPLE2 | PRACTICAL EXAMPLE3 | PRACTICAL EXAMPLE4 | COMPARATIVE EXAMPLE 1 | COMPARATIVE EXAMPLE2 | COMPARATIVE EXAMPLE3 | COMPARATIVE EXAMPLE4 |
|---|---|---|---|---|---|---|---|---|
| EMBODIMENTS | SYSTEM1 | SYSTEM21 | SYSTEM1 | SYSTEM1 | SLUDGE ALONE | SLUDGE ALONE | (SYSTEM1) | (SYSTEM21) |
| ADDITION OF LIMESTONE | YES | YES | YES | YES | NO | YES | NO | NO |
| OTHER COMPONENT-ADJUSTING AGENT | NO | NO | Mg SOURCE | Si SOURCE | NO | NO | NO | NO |
| BURNING TEMP.(°C) | 1300 | 1300 | 1270 | 1250 | 1050 | 1220 | 1100 | 1100 |
| CITRIC ACID-SOLUBLE PHOSPHORIC ACID(%) | 20,3 | 19,3 | 18,3 | 15,1 | 16,0 | 15,7 | 14,2 | 13,0 |
| PHOSPHORIC ACID SOLUBILITY IN CITRIC ACID(%) | 97 | 95 | 92 | 88 | 50 | 85 | 43 | 40 |
| SOLUBLE SILICIC ACID(%) | 14,0 | 13,8 | 12,9 | 15,4 | 0,2 | 13,6 | 0,4 | 0,4 |
| SILICIC ACID SOLUBILITY(%) | 100 | 98 | 96 | 97 | 1 | 97 | 2 | 2 |
| CITRIC ACID-SOLUBLE MAGNESIUM(%) | 1,5 | 1,4 | 2,0 | 1,2 | 3,6 | 1,6 | 2,4 | 2,5 |
| MAGNESIA SOLUBILITY IN CITRIC ACID(%) | 64 | 58 | 62 | 58 | 80 | 55 | 69 | 70 |
| CaO CONCENTRATION(%) | 44,6 | 45,2 | 46,3 | 48,6 | 8,5 | 45,4 | 17,4 | 16,0 |
| PHOSPHOROUS RECOVERY RATIO(%) | 99 | 90 | 99 | 99 | 70 | 70 | 99 | 89 |

### [Production of phosphorus recovery material (CSH aggregate)]

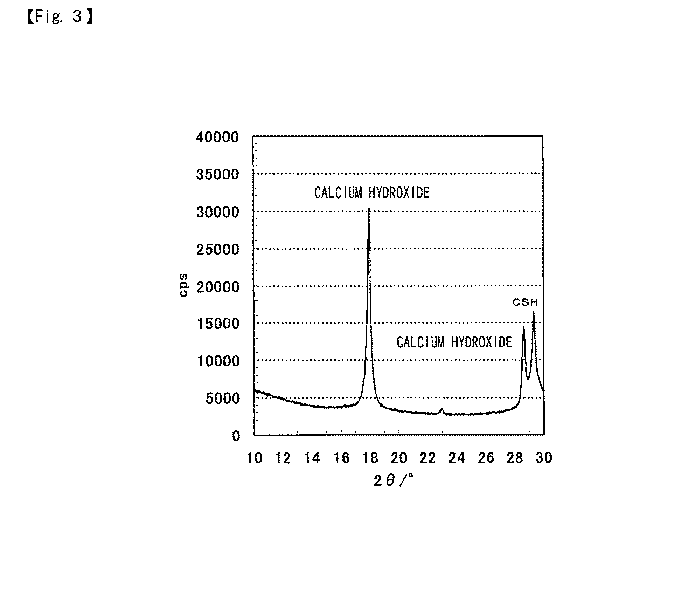

A 29.2L of tap water was equally divided into two; they were respectively added to a 800g of sodium silicate aqueous solution (liquid glass No. 3) and a 1000g of slaked lime (slaked lime made by Yakusen Sekkai Co. ltd., based on special slaked lime regulated in JIS R 9001:2006) to agitate them; and a diluted solution of a sodium silicate aqueous solution and a slurry of lime were prepared. Next, the diluted solution and the slurry were mixed to be agitated at room temperature for an hour, and a CSH aggregate whose Ca/Si molar ratios was 3.5 was generated. The Ca/Si molar ratio of the CSH aggregate was determined by chemical data that were analyzed based on JIS R 5202 "Methods for chemical-analysis of Portland cements". In addition, XRD charts of a dry powder obtained above procedure is shown in FIG. 3. Peaks of CSH and Ca(OH)₂ can be recognized in the obtained recovery material.

### [Practical Examples 1-4]

Practical examples 1, 3 and 4 are examples of fertilizer making with the system 1. Recovering phosphorus from sewage and sampling dehydrated sludge were performed at a sewage-treatment plant in a local city having a little less than 70000 residents. In this sewage-treatment plant, a 7800 m³ of sewage is treated a day on average through the conventional-activated sludge process. The plant adopts the separate system (partly combined system) as a drainage system of the sewage.

First, the practical example 1 will be explained. Solid/liquid separation by a dehydrator divides the sewage into a dehydrated sludge and a dehydration filtrate. A 0.5m³ (total carbonic acid content 1400g/L (in CO₂ equivalent)) was collected from the dehydration filtrate; hydrochloric acid was added thereto to control pH thereof to 5.3; the decarbonized dehydration filtrate (total carbonic acid content 80g/L) was introduced to an agitating container; a 13.0kg (dry weight 570g) of slurry including the prepared recovery material was added to the decarbonized dehydration filtrate; and phosphorus included in the filtrate was recovered by agitating for an hour while maintaining water temperature at 30°C. After the agitating operation was stopped the filtrate was stilled for 30 minutes to settle the recovery material containing phosphorus, and a 0.1m³ of the slurry containing recovery sediment was filtrated using a suction pump and a funnel to be solid/liquid separated, and it was dried with hot air. Dry weight of the recovery material containing phosphorus was 630g. The phosphorus concentration in the filtrate before the phosphorus recovery operation was 195mg/L, and the phosphorus concentration in the filtrate after the phosphorus recovery operation and filtration was 6mg/L. Therefore, recovery rate of the phosphorus brought from the sewage (amount of phosphorus recovered by the dehydrated sludge and the recovery material when absolute amount of the phosphorus included in the condensed sludge before dehydration (solid and liquid) is set to be 100) was 99%. In addition, CaO concentration and P₂O₅ concentration of the recovery material containing phosphorus were 42% and 32% respectively.

In addition, the phosphorus concentration was analyzed based on the molybdenum blue absorptiometric method regulated in JIS K 0102 "Testing methods for industrial wastewater". The total carbonic acid concentration was measured in inorganic carbon (IC) mode using a total organic carbon analysis equipment (TOC-Vcsn: made by Shimadzu Corporation). CaO concentration, P₂O₅ concentration, MgO concentration and K₂O concentration of a solid product were determined with an X-ray fluorescence instrument based on fundamental parameter method.

On the other hand, water content (dried at 105°C for 24 hours) and ash content (obtained by heating a 100g of the above dried product under the atmosphere at 800 °C for two hours) of the dehydrated sludge are 76.6% and 12.0% respectively.

A 50kg of the dehydrated sludge were mixed with the recovery material containing phosphorous and a 1685g of limestone powder (325 mesh product made by Ube Material Industries, Ltd) by a kneading machine with agitating vanes (High Speeder SM-150-type made by Pacific Machinery & Engineering Co., Ltd) for 30 minutes. The mixture was shaped to be granules (water content is 74%) whose length is approximately 20mm by an extruder with pore diameter of 10mm, and with a rotary kiln of 270mm in internal diameter and 4500mm in length, the granules were coinstantaneously burnt for vaporizing water, incinerating organic substance and burning to make fertilizer, at the highest temperature of 1300°C, for approximately an hour as an average residence time through the kiln, at feeding rate of 5kg/h.

The citric acid-soluble phosphate in the obtained phosphate fertilizer was analyzed by the ammonium vanadomolybdenum acid method that is defined in the fertilizer analysis method (Ministry of Agriculture, Forestry and Fisheries of Japan, National Institute for Agro-Environmental Sciences Act), and the hydrochloric acid-soluble silicate was analyzed by the perchloric acid method defined in the same act. In addition, the ratios of these analyzed values to the each total contents included in the phosphate fertilizer could provide the ratio of citric acid-soluble phosphate and the ratio of hydrochloric acid-soluble silicate.

CaO concentration of the phosphate fertilizer obtained in the practical example 1 was 45%; citric acid-soluble phosphate thereof was 20.3%; ratio of citric acid-soluble phosphate thereof was 97%; hydrochloric soluble silicate thereof was 14.0%; and ratio of hydrochloric acid-soluble silicate thereof was 100%, which shows excellent performances as phosphate fertilizer.

Next, practical example 3 will be explained. The procedure for recovering phosphorus from a dehydration filtrate was the same as the practical example 1. A 50kg of dehydrated sludge were mixed with a recovery material containing phosphorus, a 324g of high-magnesium-containing limestone powder (a limestone mined in Garo mine of TAIHEIYO CEMENT CORPORATION, its MgO concentration is 9.3%) as a magnesium source and a 1615g of limestone powder, and the mixture was burnt to make fertilizer using a rotary kiln at the highest temperature of 1270 °C in the same manner as the practical example 1.

CaO concentration of the phosphate fertilizer obtained in the practical example 3 was 46%; citric acid-soluble phosphate thereof was 18.3%; ratio of citric acid-soluble phosphate thereof was 92%; hydrochloric acid-soluble silicate thereof was 12.9%; and ratio of hydrochloric acid-soluble silicate thereof was 96%, which shows excellent performances as phosphate fertilizer.

Subsequently, practical example 4 will be explained. The procedure for recovering phosphorus from a dehydration filtrate was the same as the practical example 1. A 50kg of dehydrated sludge were mixed with a recovery material containing phosphorus, a 200g of acidic volcanic rock powder (obsidian produced in Hokkaido, its SiO₂ concentration is 75.5%) as a silica source and a 2400g of limestone powder, and the mixture was burnt to make fertilizer using a rotary kiln at the highest temperature of 1250 °C in the same manner as the practical example 1.

CaO concentration of the phosphate fertilizer obtained in the practical example 4 was 49%; citric acid-soluble phosphate thereof was 15.1%; ratio of citric acid-soluble phosphate thereof was 88%; hydrochloric acid-soluble silicate thereof was 15.4%; and ratio of hydrochloric acid-soluble silicate thereof was 97%, which shows excellent performances as phosphate fertilizer.

Next, practical example 2 by the system 21 will be explained. After a 27.9kg of recovery material slurry was added to a 1m³ of condensed sludge, the mixture was agitated for an hour while maintaining water temperature thereof at 30°C to recover phosphorus. Then, a polymer flocculant (Clean-Up C819 made by Tomooka Kaken Co, .Ltd) was added to the mixture at a rate of 0.7% to the weight of solid content thereof to grow conglomerates of the sludge, and solid/liquid separation of the mixture was carried out by the dehydrator (filter press). A part of the condensed sludge before the phosphorus recovering was filtered with a sheet of filter paper, and phosphorus concentration in the obtained filtrate was analyzed, which shows that phosphorus concentration of the filtrate was 210mg/L and all carbonic acid content thereof was 1000mg/L. Phosphorus concentration in the liquid obtained by the solid/liquid separation after recovering phosphorus was 63mg/L. Therefore, 89% of phosphorus in the sewage could be recovered. The dehydrated sludge obtained by the solid/liquid separation was approximately 109kg, and its water content was 78%, and ash content thereof was 14.3%. To the dehydrated sludge was added a 3300g of limestone powder; the mixture was shaped to be granules in the same procedure as the practical example 1; the granules were coinstantaneously burnt for vaporizing water, incinerating organic substance and burning to make fertilizer using a rotary kiln at the highest temperature of 1300°C.

CaO concentration of the phosphate fertilizer obtained in the practical example 2 was 45%; citric acid-soluble phosphate thereof was 19.3%; ratio of citric acid-soluble phosphate thereof was 95%; hydrochloric acid-soluble silicate thereof was 13.8%; and ratio of hydrochloric acid-soluble silicate thereof was 98%, which shows excellent performances as phosphate fertilizer.

### [Comparative examples 1-4]

In the comparative examples 1 and 2, any phosphorus recovery with phosphorus recovery material was not adopted, but burning was carried out with an obtained dehydrated sludge only in the same manner as the practical example 1. In the comparative example 1, the dehydrated sludge only was made to be granules, and the granules were coinstantaneously burnt for vaporizing water, incinerating organic substance and burning to make fertilizer using a rotary kiln at the highest temperature of 1050°C in the same manner as the practical example 1. At a temperature higher than 1050 °C, the sludge melted in the rotary kiln, and continuous discharge was difficult.

CaO concentration of the phosphate fertilizer obtained in the comparative example 1 was 8.5%; citric acid-soluble phosphate thereof was 16.0%; ratio of citric acid-soluble phosphate thereof was 50%, that is, the ratio of citric acid-soluble phosphate reduced by half in comparison with the practical example 1. And, hydrochloric acid-soluble silicate of the phosphate fertilizer was 0.2%, and ratio of hydrochloric acid-soluble silicate thereof was 1%, which shows hydrochloric acid-soluble silicate was remarkably reduced.

In the comparative example 2, to a It of dehydrated sludge in the comparative example 1 was added a 29.5kg of limestone powder; the mixture was made to be granules; and the granules were coinstantaneously burnt for vaporizing water, incinerating organic substance and burning to make fertilizer using a rotary kiln at the highest temperature of 1220°C.

CaO concentration of the phosphate fertilizer obtained in the practical example 2 was 45%; citric acid-soluble phosphate thereof was 15.7%; ratio of citric acid-soluble phosphate thereof was 85%; hydrochloric acid-soluble silicate thereof was 13.6%; and ratio of hydrochloric acid-soluble silicate thereof was 97%, which shows excellent performances as phosphate fertilizer.

The phosphorus recovery rates in the practical examples 1-4 were 90% or more, but those in the comparative examples 1 and 2 were only 70%, which shows that using recovery material allows almost all of the phosphorus contained in the sewage to efficiently be recovered.

In the comparative example 3, the dehydrated sludge solid/liquid separated by the dehydrator in the system 1 of the practical example 1 was mixed with the recovery material that includes phosphorus obtained in the phosphorus recovery equipment only, and no component-adjusting agent (limestone powder) was used. The mixture was made to be granules in the same manner as the practical example 1, and burning for vaporizing water, incinerating organic substance and burning to make fertilizer was performed using a rotary kiln at the highest temperature of 1100 °C.

CaO concentration of the phosphate fertilizer obtained in the comparative example 3 was 17.4%; citric acid-soluble phosphate was 14.2%; ratio of citric acid-soluble phosphate thereof was 43%; hydrochloric acid-soluble silicate thereof was 0.4%; and ratio of hydrochloric acid-soluble silicate thereof was 2%, which shows ratio of hydrochloric acid-soluble silicate was remarkably reduced. Although the phosphorus recovery rate from the sewage in the comparative example 3 was 99%, phosphate and silicate in the phosphate fertilizer are difficult to dissolve when fertilized in an agricultural land as a fertilizer, so that the fertilizer is not valuable as a fertilizer.

In the comparative example 4, the dehydrated sludge solid/liquid separated by the dehydrator and the recovery material containing phosphorous only in the phosphate fertilizer producing system 21 in the comparative example 2 were used, and no component-adjusting agent (limestone powder) was used.

The mixture was made to be granules in the same manner as the practical example 2, and the granules were coinstantaneously burnt for vaporizing water, incinerating organic substance and burning to make fertilizer using a rotary kiln at the highest temperature of 1100°C.

CaO concentration of the phosphate fertilizer obtained in the comparative example 4 was 16.0%; citric acid-soluble phosphate thereof was 13.0%; and ratio of citric acid-soluble phosphate thereof was only 40%. And, hydrochloric acid-soluble silicate of the phosphate fertilizer was 0.4%, and ratio of hydrochloric acid-soluble silicate thereof was 2%, which shows extremely poor hydrochloric acid-soluble silicate.

In the same manner as the comparative example 3, although the phosphorus recovery rate from the sewage was as high as 89%, phosphate and silicate in the phosphate fertilizer are difficult to dissolve when fertilized in an agricultural land as a fertilizer, so that the fertilizer is not valuable as a fertilizer. The citric acid-soluble phosphate of the practical examples 1 and 2 were 19% or more, but those of comparative examples 3 and 4 were 13-14%, which shows higher content of CaO in the burnt fertilizer contributes to producing high-quality fertilizer.

The results described above prove that with the present invention almost all of the phosphorus contained in the sewage can efficiently be recovered, and a high-quality phosphate fertilizer can be obtained from the sludge including the recovered phosphorus.

### EXPLANATION OF REFERENCE NUMBERS

- 1, 21: phosphate fertilizer producing systems
- 2: water treatment equipment
- 3: phosphorus recovery equipment
- 4: mixing and burning equipment
- 5: primary sedimentation tank
- 6: biological treatment tank
- 7: final sedimentation tank
- 8: centrifugal concentrator
- 9: methane fermentation tank
- 10: storage tank
- 11: dehydrator
- 12: phosphorus recovery process
- 13: recovered material separation process
- 14: mixer
- 15: rotary kiln
- 16: pulverizer
- 17: pan pelletizer
- 18: gravitational sedimentation tank

## Claims

1. A method for producing phosphate fertilizer comprising the steps of:
bringing phosphorous in a sewage in a sewage-treatment plant into contact with a calcium-containing recovery material to recover the phosphorous and
burning the phosphorus recovered material, a dehydrated sludge generated in the sewage-treatment plant and a calcium source together.

2. The method for producing phosphate fertilizer as claimed in claim 1, wherein the sewage in the sewage-treatment plant is concentrated;
to the condensed sewage is added the recovery material to bring phosphorous in the sewage into contact with the recovery material and then the sewage is dehydrated to obtain the phosphorus recovered material and a dehydrated sludge together; and
to the phosphorus recovered material and the dehydrated sewage, which are obtained by the dehydration, is mixed the calcium source and the mixture is burnt.

3. The method for producing phosphate fertilizer as claimed in claim 1, wherein the sewage in the sewage-treatment plant is condensed and dehydrated to divide it into a dehydration filtrate and a dehydrated sludge;
to the obtained dehydration filtrate is added the recovery material to bring phosphorous in the dehydration filtrate into contact with the recovery material and then the dehydration filtrate is solid-liquid separated to obtain the phosphorus recovered material; and
the phosphorus recovered material, the dehydrated sludge and the calcium source are mixed together and burnt.

4. The method for producing phosphate fertilizer as claimed in claim 1, 2 or 3, wherein the burning of the phosphorus recovered material, the dehydrated sludge and the calcium source is carried out at a burning temperature of 1150 °C or higher and 1350°C or lower.

5. The method for producing phosphate fertilizer as claimed in one of claims 1 to 4, wherein said calcium oxide content in the phosphate fertilizer is 30 mass percent or higher and 55 mass percent or lower.

6. The method for producing phosphate fertilizer as claimed in one of claims 1 to 5, wherein a ratio of citric acid-soluble phosphate of the phosphate fertilizer is 60 percent or higher.

7. The method for producing phosphate fertilizer as claimed in one of claims 1 to 6, wherein a ratio of hydrochloric acid-soluble silicate of the phosphate fertilizer is 40 percent or higher.

8. The method for producing phosphate fertilizer as claimed in one of claims 1 to 7, wherein said calcium-containing recovery material is an amorphous calcium silicate hydrate alone or an aggregate of the amorphous calcium silicate hydrate and calcium hydroxide.

9. The method for producing phosphate fertilizer as claimed in one of claims 1 to 8, wherein in addition to the calcium source, a magnesium source or/and a silica source are mixed and burnt.
